# FASCICULE DE BREVET EUROPEEN

(11) **EP 0 956 526 B1**
(45) Date de publication et mention de la délivrance du brevet: **11.07.2001**
(21) Numéro de dépôt: 98905465.5
(22) Date de dépôt: 30.01.1998
(51) Int. Cl.: G06F 9/46

(54) **PROCEDE ET DISPOSITIF DE TRAITEMENT DE PLUSIEURS APPLICATIONS TECHNIQUES AVEC POUR CHACUNE D'ELLES LA SURETE QUI LUI EST PROPRE**
VERFAHREN UND VORRICHTUNG ZUR BEARBEITUNG EINER VIELZAHL VON TECHNISCHEN ANWENDUNGEN MIT JEWEILS EIGENER SICHERHEIT
METHOD AND DEVICE FOR PROCESSING SEVERAL TECHNICAL APPLICATIONS EACH PROVIDED WITH ITS PARTICULAR SECURITY

(30) Priorité: 31.01.1997 FR 9701073
(43) Date de publication de la demande: 17.11.1999
(73) Titulaire: THALES AVIONICS S.A., 78141 Vélizy Villacoublay Cédex (FR)
(72) Inventeur: COLAS, Gérard, Thomson-CSF S.C.P.I., F-94117 Arcueil Cedex (FR); GUEDOU, Philippe. Thomson-CSF S.C.P.I., F-94117 Arcueil Cedex (FR); LE BORGNE, Olivier, Thomson-CSF S.C.P.I., F-94117 Arcueil Cedex (FR); ROWENCZYN, Jean-Jacques, Thomson-CSF S.C.P.I., F-94117 Arcueil Cedex (FR)
(74) Mandataire: Simonnet, Christine
(86) Numéro de dépôt international: FR9800174
(87) Numéro de publication internationale: WO9834171

(56) Documents cités:
- EP-A- 0 415 515
- KOROUSIC-SELJAK B: "TASK SCHEDULING POLICIES FOR REAL-TIME SYSTEMS" MICROPROCESSORS AND MICROSYSTEMS, vol. 18, no. 9, 1 novembre 1994, pages 501-511, XP000483414

## Description

La présente invention est relative à un procédé et un dispositif de traitement de plusieurs applications techniques contrôlées par calculateur, chacune d'elles s'exécutant avec la sûreté qui lui est propre.

Ce procédé est utilisable notamment dans un système de gestion de vol (connu sous la dénomination anglaise FMS pour "Flight Management System") pour aéronef qui dialogue avec le pilote et qui l'assiste dans un certain nombre d'opérations. Actuellement les applications telles que le pilote automatique, le système de détection de la proximité du sol, le système de protection contre le décrochage, le système de concentration des paramètres du vol pour l'enregistreur du vol ou "boîte noire", le système de concentration de données pour la maintenance, le système d'analyse des pannes, le système d'affichage des paramètres du vol destinés au pilote etc. s'exécutent simultanément chacune dans un calculateur différent. Ces différentes applications n'interfèrent donc pas entre elles car elles sont exécutées indépendamment les unes des autres.

Ces applications techniques ne nécessitent pas la même sûreté de fonctionnement. On définit une échelle avec plusieurs niveaux de criticité A, B, C, D... pour qualifier la sûreté requise pour une application technique. Ces niveaux de criticité reflètent le taux d'apparition résiduel maximum de pannes qualifiées de "critiques". Le niveau A est plus élevé que le niveau D.

On conçoit aisément que le pilote automatique ou le système d'affichage de paramètres pour le pilote requièrent un niveau de criticité plus élevé que celui de l'application maintenance qui elle n'est pas critique.

En général, pour traiter une application technique dans un calculateur, on a besoin de temps de travail, d'espace mémoire et de données à envoyer vers des organes qui sont associés à l'application.

Le traitement dans un calculateur d'une application technique nécessitant un niveau de criticité élevé se fera avec beaucoup plus d'étapes de tests et de vérifications que celui d'une application technique dont le niveau est plus bas.

Le développement d'une application technique possédant un niveau de criticité faible coûte moins cher que celui d'une application technique possédant un niveau plus élevé.

Pour ne pas augmenter inutilement le coût de développement d'une application technique mais aussi éventuellement le temps de traitement et la place mémoire, on est donc amené à développer toutes ces applications techniques avec le ou les niveaux de criticité qui leur sont propres. Actuellement, puisque chacune d'elles est contrôlée par son propre calculateur, il ne se pose pas de problème de sûreté entre les applications techniques.

Avec le développement important de la vitesse et de la capacité des microprocesseurs, les calculateurs équipés de tels microprocesseurs seraient capables de supporter plusieurs de ces applications techniques. Un tel regroupement, de l'ordre de huit applications, permettrait une réduction très sensible des coûts.

Mais un problème important se pose. L'exécution d'une des applications techniques ayant un ou plusieurs niveaux de criticité ne doit pas perturber l'exécution dans le même calculateur d'une autre application de niveau supérieur ou égal. Il n'est pas acceptable d'augmenter le taux d'apparition de pannes critiques d'une application technique du fait de son voisinage, dans un même calculateur, avec une autre application technique moins critique.

Par perturbation, il faut entendre soit modification des données en écriture ou acheminées vers les organes associés à autre application, soit modification du temps alloué au traitement d'une autre application.

La présente invention vise à résoudre ce problème en proposant un procédé de traitement de plusieurs applications techniques sur un même calculateur en évitant toute interaction d'une application sur une autre, comme indiqué dans la revendication 1.

Les caractéristiques indiquées dans la première partie de la revendication 1 sont connues dans EP-A-0 415 515.

Pendant le traitement d'une application technique, on peut avoir à exécuter une ou plusieurs étapes dénommées "sections atomiques" qui ne peuvent être interrompues. Le procédé peut générer pendant une tranche de temps, une interruption de fin destinée à interrompre l'application courante sauf si une section atomique est en cours d'exécution, l'intervalle de temps entre une interruption de fin et l'interruption de début suivante étant au moins égal à la durée de la plus longue des sections atomiques.

Pour réaliser le découpage spatial, le procédé attribue des droits à l'application technique courante et, avant de procéder à une inscription de données relatives à la dite application technique, dans une tranche d'espace mémoire, vérifie si cette tranche d'espace mémoire correspond aux droits possédés par l'application technique courante, les droits de la dite application technique étant notamment fonction de son niveau de criticité.

Le procédé selon l'invention peut aussi s'appliquer aux données destinées à des organes associés aux différentes applications. Pour cela, ie procédé, après avoir inscrit les dites données dans une tranche d'espace mémoire, en ayant effectué au préalable la vérification précédente, les envoie via un bus de communication vers l'organe associé en les faisant éventuellement transiter par une zone de mémoire tampon.

Afin de garantir la non interaction d'une application technique sur une autre, le procédé selon l'invention peut générer une interruption de violation en écriture avec inhibition d'écriture, lorsqu'une application technique accède en écriture à une tranche d'espace mémoire pour laquelle elle est sans droits.

Une protection en lecture peut être envisagée; pour cela, avant de procéder à une lecture de données relatives à l'application technique en cours d'exécution dans une tranche d'espace mémoire, le procédé peut vérifier si cette tranche d'espace mémoire correspond aux droits possédés par l'application technique en cours d'exécution. II peut générer une interruption de violation en lecture lorsqu'une application technique accède en lecture à une tranche d'espace mémoire pour laquelle elle est sans droits. Cette sécurité en lecture est un moyen supplémentaire de détecter des éventuelles défaillances des applications techniques.

Il est envisageable que le procédé exécute dans une même tranche de temps, sans ségrégation temporeile, une application technique avec plusieurs niveaux de criticité.

Lorsque l'une des applications techniques fait appel aux services du logiciel de base du calculateur, le procédé selon l'invention interrompt temporairement le calculateur et met à jour les droits de l'application technique courante, cette mise à jour correspondant aux droits possédés par le logiciel de base lorsqu'il exécute une requête pour l'application technique, le logiciel de base possédant un niveau de criticité supérieur ou égal au niveau le plus élevé de toutes les applications techniques traitées par le calculateur.

La présente invention concerne également un dispositif de traitement de plusieurs applications techniques contrôlées par calculateur comme indiqué dans la revendication 9.

La présente invention sera mieux comprise à la lecture de la description détaillée d'exemples non limitatifs illustrée par les dessins annexes qui représentent :
- la figure 1 : un exemple de cycle de temps de travail qui permet le traitement des applications selon le procédé de l'invention;
- la figure 2 : un exemple des moyens pour réaliser le découpage temporel du procédé conforme à l'invention ;
- la figure 3a : la structure de la mémoire du calculateur utilisé pour le traitement des applications dans le procédé de l'invention ;
- la figure 3b : un exemple des moyens pour réaliser le découpage spatial du procédé conforme à l'invention ;
- la figure 4a : un autre exemple de cycle de temps de travail qui permet le traitement des applications selon le procédé de l'invention;
- la figure 4b : les moyens de traitement des données vers les sorties associées aux applications traitées par le procédé selon l'invention ;
- la figure 5 : un exemple de la table de vérité utilisée pour le découpage spatial ;
- la figure 6 : l'imbrication des zones mémoires du calculateur utilisé dans le procédé de traitement selon l'invention ;
- la figure 7 : un exemple partiel du dispositif de traitement conforme à l'invention;
- la figure 8a : un exemple des moyens pour réaliser le découpage spatial du procédé selon l'invention, assurant une protection en lecture;
- la figure 8b : un exemple de table de vérité utilisée pour la protection en lecture.

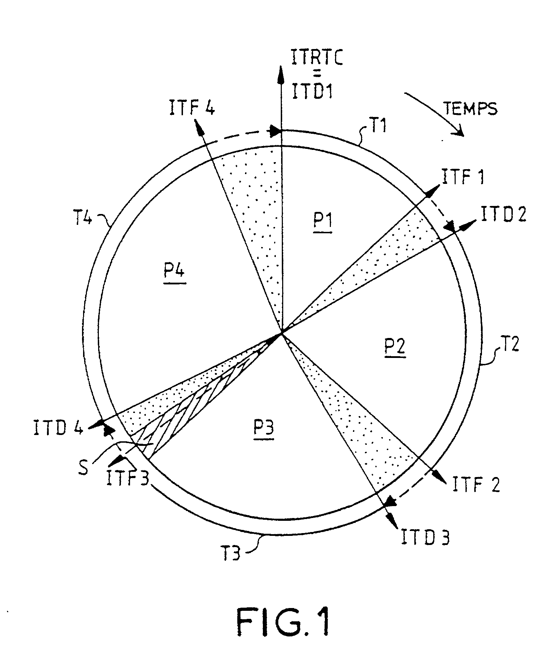

Le calculateur unique qui permet le traitement des différentes applications techniques repérées P1, P2, P3, P4 sur la figure 1, fonctionne avec un logiciel de base dont le niveau de criticité est au moins égal au niveau de criticité le plus élevé des applications techniques à traiter. Le logiciel de base est commun et chaque application technique utilise les ressources du logiciel de base.

Le procédé de traitement selon l'invention consiste à réaliser un découpage du temps de travail et de l'espace mémoire du calculateur pour en allouer des tranches aux différentes applications techniques.

Le temps de travail du calculateur est divisé en cycles successifs dont la durée est, par exemple, de l'ordre de 50 millisecondes. La figure 1 montre de manière schématique l'un de ces cycles. Les cycles successifs sont obtenus par des interruptions ITRTC du temps de travail du calculateur.

Le procédé selon l'invention consiste à allouer aux applications techniques P1, P2, P3, P4 pendant ces cycles de travail, au moins une tranche de temps T1, T2, T3, T4 de durée fixée au préalable. Pendant la tranche de temps qui lui est allouée l'application technique va s'exécuter et à la fin de cette tranche de temps elle est interrompue pour que l'application technique suivante puisse débuter.

Par exemple, à la fin de la tranche de temps T2 affectée à l'application technique P2, une interruption de début ITD3 est générée, elle commande le début de l'application technique suivante P3. Cette application technique suivante P3 débute de manière sûre à un instant fixé du cycle qui correspond à la fin de la tranche T2 de manière à ce que la durée de la tranche de temps T3 qui est affectée à l'application technique P3 ne soit pas modifiée. En cours de fonctionnement du calculateur, une interruption de début ITD provoque un déroutement du calculateur vers une autre application technique en vue de son traitement. Les interruptions de début sont référencées ITD1, ITD2, ITD3, ITD4.

Pendant l'exécution d'une appiication technique, le logiciel de base peut effectuer des "sections atomiques", ce sont des étapes qui ne peuvent pas être interrompues. Par exemple, la lecture de données dans un buffer ne peut être interrompue car après une interruption, si la lecture de telles données se poursuit au cycle suivant, les données risquent d'avoir été modifiées.

Pour éviter cela, il peut être prévu de faire précéder une interruption de début ITD d'une interruption de fin ITF qui interrompt l'application technique courante, sauf si une section atomique est en cours d'exécution. L'application technique en question ne sera interrompue alors qu'à la fin de la section atomique. Cette interruption de fin ITF est masquable temporairement par le logiciel de base car elle n'est active que dans certains cas, lorsqu'elle arrive en l'absence d'étape qui ne peut être interrompue. Les interruptions de fin sont référencées ITF1, ITF2, ITF3, ITF4.

Une interruption de début a un niveau de priorité supérieur à celui des interruptions de fin ce qui permet de rendre les interruptions de début non masquages vis à vis des sections atomiques.

Si pour une raison ou pour une autre, le traitement d'une application technique prend plus de temps que celui qui lui est alloué, l'interruption de début garantit à l'application technique suivante une tranche de temps non entamée.

L'intervalle de temps entre une interruption de fin IF et l'interruption de début ITD qui la suit est supérieur ou égal à la durée la plus longue des sections atomiques du logiciel de base. Cet intervalle de temps est, par exemple, de l'ordre de 500 µs.

Sur la figure 1, on a supposé qu'une section atomique S se déroulait au moment de l'interruption de fin ITF3. Cette dernière est alors sans action et la section atomique S continue à se dérouler. L'interruption ITD4 qui intervient ensuite lorsque la section atomique est terminée, marque le début de l'exécution de l'application technique suivante P4.

Sur l'exemple représenté on a supposé que l'interruption de cycle ITRTC était confondue avec l'interruption de début ITD1 de la première application technique P1 mais ce n'est pas une obligation.

On pourrait envisager que l'interruption de cycle ITRTC soit confondue avec l'interruption de fin ITF4 de la dernière application technique P4 ou bien qu'elle arrive entre l'interruption de fin ITF4 de la dernière application technique P4 et l'interruption de début ITD1 de la première P1.

La position des interruptions de cycle ITRTC, des interruptions de début ITD et de fin ITF sont programmables, de préférence avec une résolution d'au moins 50 microsecondes.

Une interruption de fin ITF provoque le changement de l'application technique en cours, par le logiciel de base. Dans l'exemple décrit, ce changement correspond à l'incrémentation du rang de l'application en cours, car les applications successives ont des rangs croissants. Cette incrémentation sert pour le découpage spatial qui va être expliqué plus loin.

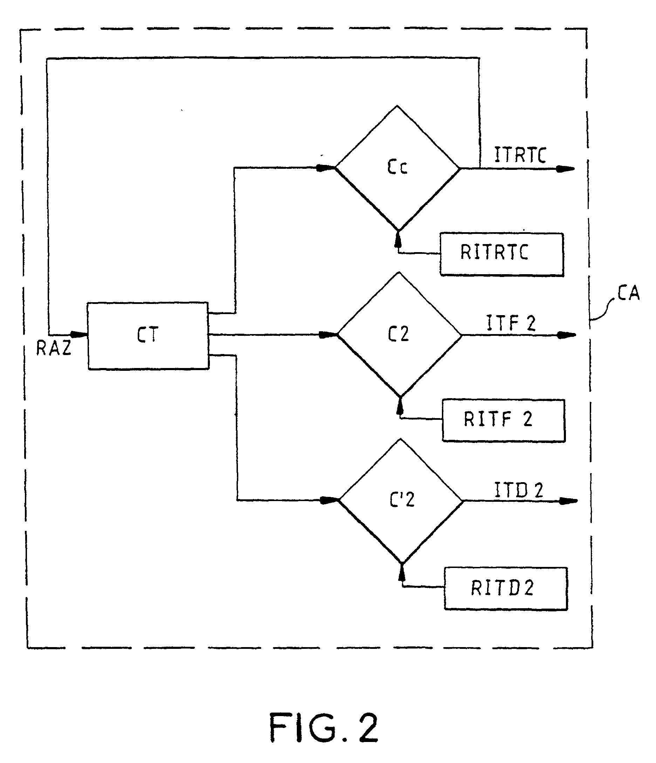

On se réfère à la figure 2 qui montre partiellement un dispositif de traitement de plusieurs applications techniques au sein d'un même calculateur CA. Ce dispositif permet de réaliser un découpage spatial du temps de travail du calculateur CA. Ce dispositif comporte des moyens pour définir des cycles de temps de travail du calculateur CA. Ces moyens peuvent être formés par un compteur de temps CT, un registre de durée de cycle RITRTC et un comparateur d'égalité Cc. Le compteur de temps CT peut par exemple être cadencé par l'horloge de base du calculateur CA divisée par 80. Le comparateur d'égalité Cc compare la valeur du compteur de durée CT à celle du registre de durée de cycle RITRTC et en cas d'égalité génère une interruption de cycle ITRTC et remet à zéro le compteur de temps CT.

Le dispositif comporte aussi des moyens pour définir pendant les cycles de temps de travail, les tranches de temps allouées aux applications techniques et qui génèrent, en fin de tranche de temps, l'interruption de début ITD. Ces moyens peuvent comporter pour chaque application technique traitée pendant une tranche de temps (sur la figure 2 on a représenté les moyens utilisés pour l'application P2 de rang 2), un registre de durée de début RITD2 et un comparateur d'égalité C'2 et faire appel au compteur de durée CT. Le registre de durée de début RITD2 permet de définir la durée entre la remise à zéro du compteur de temps CT et le début de l'application technique à venir. Le comparateur d'égalité C'2 compare la valeur du compteur de durée CT à celle du registre de durée de début RITD2 et en cas d'égalité génère une interruption de début ITD2.

Le dispositif peut en outre comporter des moyens pour générer, pendant une tranche de temps, l'interruption de fin ITF. Ces moyens peuvent comporter un registre de durée de fin RITF2 et un comparateur d'égalité C2 et faire appel au compteur de durée CT. Le registre de durée de fin RITF2 permet de définir la durée entre la remise à zéro du compteur de temps CT et la fin de l'application en cours. Le comparateur d'égalité C2 compare la valeur du compteur de durée CT à celle du registre de durée de fin RITF2 et en cas d'égalité génère une interruption de fin ITF2.

Toutes ces interruptions sont gérées par un logiciel appelé SLICER qui est inclus dans le logiciel de base. On utilise deux registres de durée par tranche de temps dans un cycle.

Si le déroulement de l'une des applications technique, P1 par exemple, est anormal, le déroulement de l'application technique suivante P2 n'est pas perturbé.

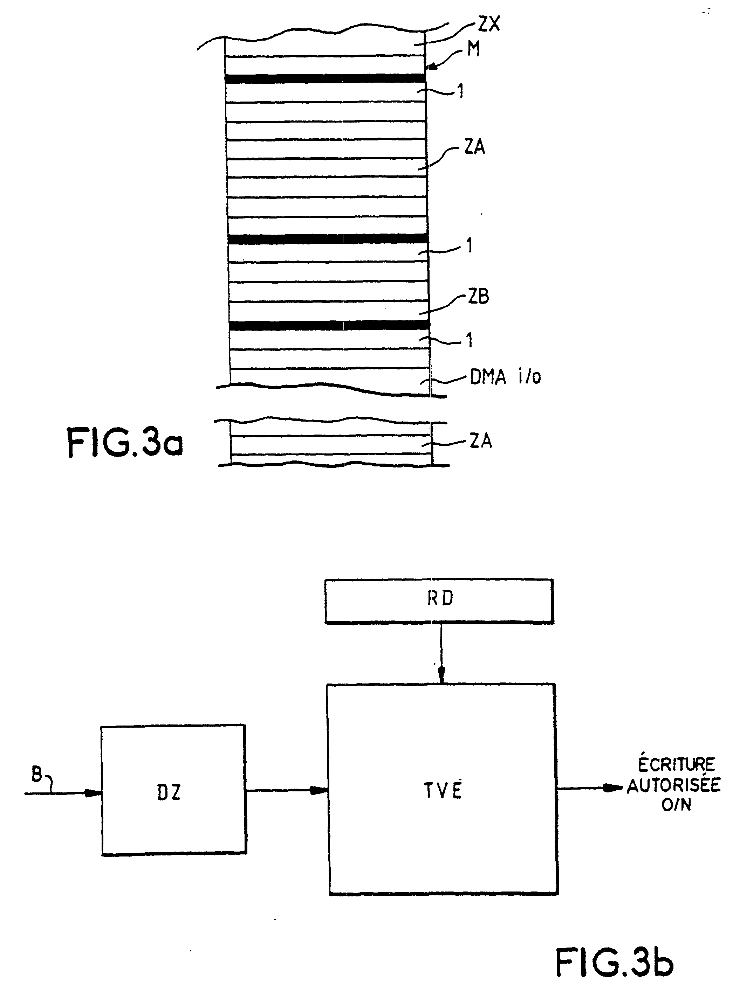

On se réfère à la figure 3a. Le champ adressable M du calculateur comporte plusieurs zones ZA, ZB, DMA I/O, ZX découpées en tranches 1 d'espace mémoire. Certaines zones telles que les zones de données ZA, ZB, sont dédiées à une seule application technique et sont accessibles en écriture à cette application technique et au logiciel de base, d'autres, telle que la zone spécifique DMA I/O, sont dédiées à un ou plusieurs dispositifs matériels décrits ultérieurement, et sont accessibles en écriture au logiciel de base et sont protégées en écriture vis à vis des applications techniques, d'autres ZX encore peuvent être de libre accès à tous les acteurs aptes à écrire. Certaines zones correspondent à des mémoires véritables d'autres à des champs d'adresses utilisées pour le dialogue avec les dispositifs matériels autres que des mémoires.

Selon le procédé de l'invention, certaines tranches d'espace mémoire sont dédiées à une application technique et ces tranches d'espace sont protégées, c'est-à-dire inaccessibles en écriture aux autres applications techniques accueillies sur le même calculateur.

On se réfère à la figure 3b qui montre des moyens permettant de réaliser un découpage spatial du champ adressable M et donc d'allouer à chaque application technique au moins une tranche d'espace mémoire protégée en écriture vis à vis des autres applications techniques. Ces moyens comportent un registre de droits RD qui permet de connaître les droits de l'application technique courante, un détecteur de zone DZ qui détermine l'affectation de la tranche d'espace mémoire accédée par le calculateur et une table de vérité en écriture TVE qui indique si l'accès est autorisé ou non.

Le registre de droits RD est d'accès libre en lecture. Il sert de première entrée (colonnes) à la table de vérité TVE. Il est tenu à jour par le logiciel de base et uniquement par lui comme on l'a vu précédemment.

Les droits d'une application technique sont déterminés notamment en fonction de son niveau de criticité au moment de l'inscription dans le registre de droits RD. On va voir ultérieurement que dans une tranche de temps une application technique peut avoir plusieurs niveaux de criticité.

Le détecteur de zone DZ permet de savoir quelle est l'affectation de la tranche d'espace mémoire accédée. Il peut être réalisé par une mémoire Flash EPROM téléchargeable. Cette mémoire peut contenir pour chaque tranche d'espace, sur plusieurs bits, notamment le type de zone mémoire, le rang de l'application qui lui est affecté, le niveau de criticité, éventuellement un bit privé qui indique lorsqu'il est actif, par exemple à 1, que la tranche d'espace est confidentielle en lecture vis-à-vis des autres applications techniques et qu'elle ne peut être lue que par l'application technique de même rang. Lorsque le bit privé est inactif, par exemple à 0, cela signifie que la tranche d'espace n'est pas confidentielle en lecture comme on le verra ultérieurement.

Avantageusement toutes ces zones peuvent être formées de plusieurs blocs disjoints. La figure 3a montre la zone ZA comportant au moins deux blocs disjoints. Une réalisation à base de mémoire morte permet une grande souplesse dans la réalisation des zones avec des blocs disjoints. La taille de la mémoire morte permet de déterminer la granularité des zones.

Le détecteur de zone DZ est relié par un bus B au microprocesseur du calculateur (non représenté) qui balaie toutes les tranches d'espace mémoire. Le détecteur de zone sert de seconde entrée (lignes) à la table de vérité TVE. Une interruption de violation en écriture inhibant l'écriture est activée lorsqu'une application technique accède en écriture à une tranche d'espace mémoire pour laquelle elle n'a pas de droits.

Chaque application technique est associée à un ou plusieurs organes vers lesquels elle est destinée à envoyer des données. Le procédé selon l'invention permet également de protéger ces organes.

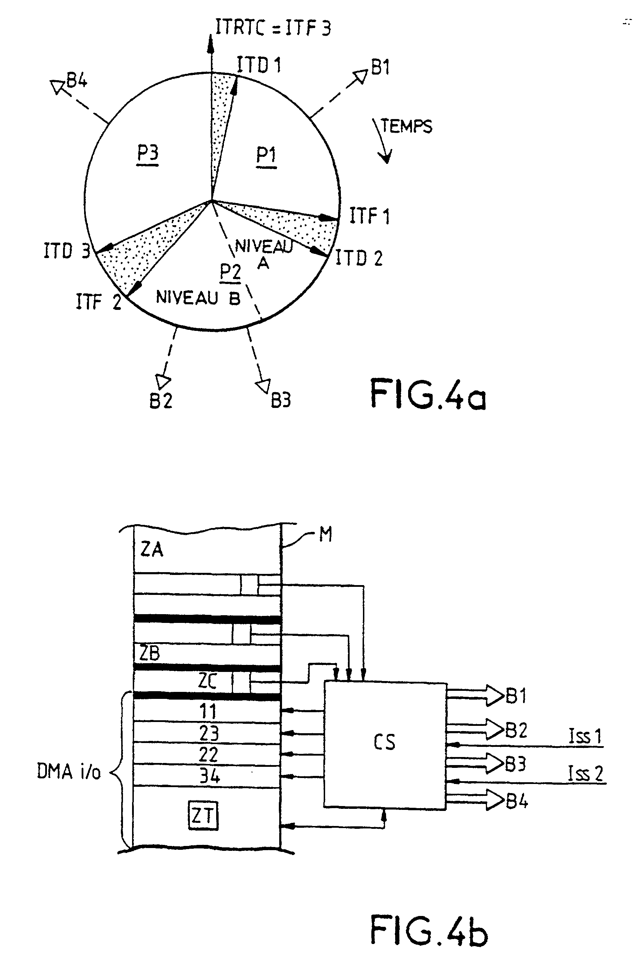

On se réfère aux figures 4a, 4b qui représentent respectivement un cycle de traitement du calculateur et partiellement le champ adressable M du calculateur avec la zone spécifique DMA I/O découpée en tranches d'espace mémoire et les zones de données ZA, ZB, ZC dédiées aux applications techniques. Au moins un dispositif matériel CS d'accès au champ adressable M observe l'inscription des données dans les tranches d'espace dédiées aux applications techniques et il peut les échantillonner au moment où elles sont inscrites. Il les achemine via des bus de communication B1, B2, B3, B4, par exemple de type ARINC 429 vers l'organe approprié (non représenté). Les organes correspondent, par exemple, aux gouvernes pour l'application pilote automatique ou bien au support magnétique de l'enregistreur de vol pour l'application de concentration de données pour l'enregistreur de vol.

Par exemple, on suppose que l'application technique P1 peut envoyer des données sur le bus B1 et qu'elle est associée à la zone ZA, que l'application technique P2 peut envoyer des données sur les bus B3, B2 et qu'elle est associée à la zone ZB et que l'application technique P3 peut envoyer des données sur le bus B4 et qu'elle est associée à la zone ZC.

Eventuellement le dispositif matériel CS d'accès au champ adressable disposera d'une zone mémoire tampon ZT dans la zone d'espace spécifique DMA I/O pour stocker temporairement les données avant de les émettre.

A chaque fois qu'une application technique veut envoyer des données vers un organe, les données ne peuvent être inscrites que dans la tranche d'espace qui convient et cette autorisation d'inscription est donnée par la table de vérité TVE. Avec ce système de protection le système de concentration de donnée pour l'enregistreur de vol ne peut envoyer des données vers les gouvernes.

Au moins un dispositif matériel CS peut recevoir des informations en provenance des organes, via des lignes série Is1, Is2 . Le dispositif matériel CS les écrit dans les tranches 11, 23, 22, 34 de la zone spécifique DMA I/O où elles sont disponibles en lecture pour une ou plusieurs applications techniques. La protection en lecture est décrite ultérieurement. Sur la figure 4b, un seul dispositif matériel CS a été représenté pour l'émission et pour la réception, mais on peut en prévoir plusieurs fonctionnant dans un sens ou dans les deux.

Pendant une tranche de temps donnée, une application technique peut être exécutée, ce qui correspond à différentes taches de différents niveaux de criticité. Par exemple, pendant cette tranche de temps on va effectuer des taches de calculs puis ensuite des taches de tests de comparaison. Les calculs requièrent généralement un niveau plus élevé que les tests de comparaison. Les données issues des tests ne pourront être inscrites dans la tranche d'espace réservée aux calculs. On passe toujours du niveau le plus élevé au niveau le plus bas pour éviter que le niveau le plus bas ne perturbe le plus élevé. La ségrégation temporelle existe toujours vis-à-vis de l'application technique suivante. La figure 4a montre un cycle de travail dans lequel l'application P2 est de niveau A dans une première partie de la tranche de temps qui lui est allouée et de niveau B dans une seconde partie.

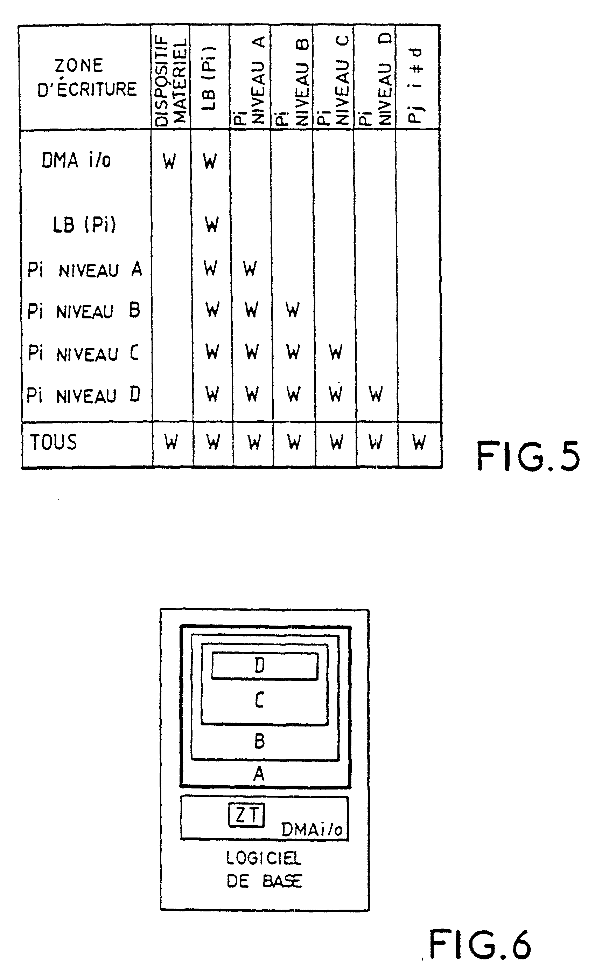

La figure 5 montre un exemple de table de vérité TVE en écriture. Les lignes représentent différentes zones du champ adressable : zone spécifique DMA I/O dédiée aux dispositifs matériels, zone réservée au logiciel de base LB mandaté par l'application technique Pi, zone réservée à l'application technique Pi de niveau A, zone réservée à l'application technique Pi de niveau B, zone réservée à l'application technique Pi de niveau C, zone réservée à l'application technique Pi de niveau D, zone réservée à tous les acteurs susceptibles d'écrire. Les colonnes représentent les différents acteurs susceptibles d'écrire dans ces zones à savoir, le dispositif matériel CS, le logiciel de base mandaté par l'application technique Pi de niveau quelconque, l'application technique Pi de niveau A, l'application technique Pi de niveau B, l'application technique Pi de niveau C, l'application technique Pi de niveau D, l'application technique Pj (j différent de i) ou le logiciel de base mandaté par l'application technique Pj. La lettre W au croisement d'une ligne et d'une colonne est une autorisation d'écriture. Lorsqu'il n'y a rien au croisement d'une ligne et d'une colonne c'est qu'il y a interdiction d'écrire.

La figure 6 montre l'imbrication des zones parmi lesquelles celles correspondant aux différents niveaux des applications techniques, au logiciel de base, la zone spécifique DMA I/O englobant la zone tampon ZT.

Pendant l'exécution d'une application technique d'un niveau de criticité donné, on peut être amené à demander les services du logiciel de base LB de niveau supérieur.

Chaque appel au logiciel de base se fait à l'aide d'un registre de requête. L'écriture du rang de l'application technique courante dans ce registre provoque une interruption ITSVC temporaire du calculateur et une mise à jour du registre de droits RD s'effectue automatiquement lors de l'interruption. Ces deux opérations sont indissociables. La mise à jour correspond aux changement des droits de l'application technique courante par ceux du logiciel de base appliqué à l'application technique qui l'a appelé.

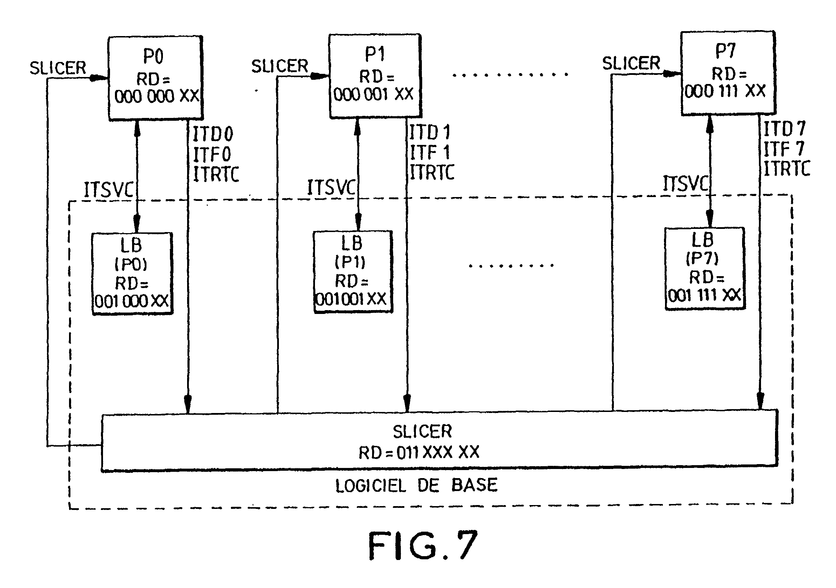

La figure 7 montre un exemple partiel d'un dispositif de traitement de plusieurs applications techniques conforme à l'invention. Les différentes applications sont référencées P0 à P7. Pour chacune d'elles est mentionné son code dans le registre de droits RD. Au cours de son traitement, un appel au logiciel de base LB provoque une interruption ITSVC et un changement des droits dans le registre de droits. La génération des autres interruptions ITRTC, ITF, ITD et le rôle du logiciel SLICER ont été décrits précédemment.

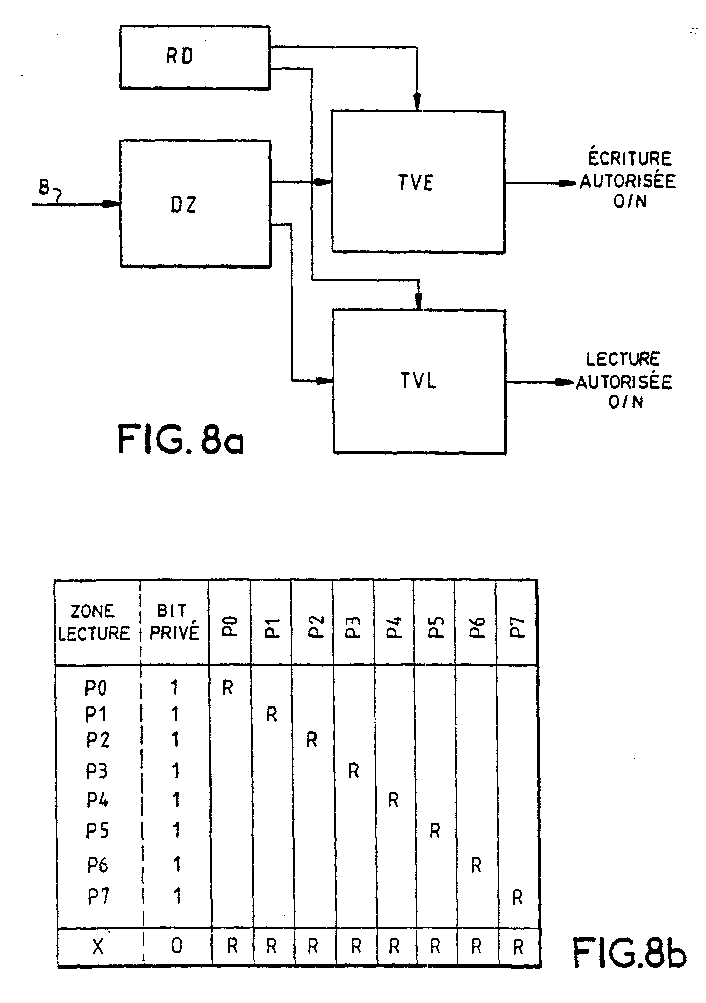

En plus de la protection en écriture des différentes zones du champ adressable du calculateur, le procédé de traitement selon l'invention peut prévoir une protection en lecture. La figure 8a complète la figure 3b et montre les moyens permettant de réaliser un découpage spatial du champ adressable M du calculateur avec une protection en écriture et en lecture des différentes tranches d'espace mémoire. Le registre de droits RD, le détecteur de zone DZ et une table de vérité en lecture TVL sont utilisés pour réaliser cette protection. On a vu lors de la description du détecteur de zone DZ que celui-ci pouvait comporter pour chaque tranche mémoire accédée un bit privé indiquant, par exemple, si la tranche d'espace mémoire accédée est confidentielle en lecture vis à vis des autres applications. La figure 8b est un exemple de table de vérité TVL en lecture. Les lignes représentent différentes zones du champ adressable, les colonnes différentes applications. Le registre de droits RD alimente les colonnes et le détecteur de zone DZ les lignes. On trouve d'abord les zones correspondant aux applications techniques P0 à P7. Ces zones ont un bit privé égal à 1 ce qui signifie interdiction en lecture par les applications techniques de rang différent. Une zone quelconque référencée X correspondant à toutes les zones pour lesquelles le bit privé n'est pas actif (dans l'exemple égal à 0) peut être lue par toutes les applications techniques P0 à P7. Cette zone est utilisée pour stocker, par exemple, des données reçues des organes par les dispositifs matériels et qui sont utilisables par plusieurs applications techniques ou des données produites par une application techniques et qui sont mises à la disposition d'une ou plusieurs autres. Un R au croisement d'une ligne et d'une colonne indique une autorisation de lecture. Lorsqu'il n'y a rien au croisement d'une ligne et d'une colonne c'est qu'il y a interdiction de lecture. Une interruption de violation en lecture est activée lorsqu'une application technique accède en lecture à une tranche d'espace mémoire pour laquelle elle n'a pas de droits.

## Revendications

1. Procédé de traitement de plusieurs applications (P1, P2, P3) techniques contrôlées par calculateur comportant les étapes consistant à :
- exécuter toutes les applications techniques au sein d'un même calculateur travaillant par cycles de travail successifs en leur allouant pendant ces cycles de travail, au moins une tranche de temps (T1, T2, T3) de durée fixée au préalable,
- générer en fin de tranche (T3) de temps allouée à une application (P3) technique une interruption de début (ITD4) visant à faire débuter l'exécution d'une autre application (P4) technique,
- allouer à chaque application technique au moins une tranche d'espace mémoire pour l'écriture de données, cette tranche d'espace mémoire étant inaccessible en écriture aux autres applications techniques,
caractérisé en ce qu'il comporte une étape consistant à :
- générer au préalable, pendant la tranche de temps (T3), une interruption de fin (ITF3) destinée à interrompre l'application (P3) courante sauf si une étape non susceptible d'être interrompue, dite section atomique (S), est en cours d'exécution, l'intervalle de temps entre l'interruption de fin (ITF3) et l'interruption de début suivante (ITD4) étant au moins égal à la durée la plus longue des sections atomiques, de manière à ce qu'une application technique qui possède en cours d'exécution un niveau de criticité donné ne perturbe pas une autre application technique ayant un niveau de criticité supérieur ou égal.

2. Procédé de traitement de plusieurs applications (P1, P2, P3) techniques selon la revendication 1, caractérisé par le fait qu'il attribue des droits à l'application technique courante et, avant de procéder à une inscription de données relatives à l'application technique en cours d'exécution dans une tranche d'espace mémoire, vérifie si cette tranche d'espace mémoire correspond aux droits possédés par l'application technique en cours d'exécution, les droits de la dite application technique étant notamment fonction de son niveau de criticité.

3. Procédé de traitement de plusieurs applications (P1, P2, P3) techniques selon la revendication 2, dans lequel certaines des données relatives à une application technique sont acheminées vers au moins un organe associé à l'application technique, caractérisé par le fait qu'il les envoie de la tranche d'espace mémoire via un bus (B1, B2) de communication vers l'organe associé en les faisant éventuellement transiter par une zone de mémoire tampon (ZT)

4. Procédé de traitement de plusieurs applications (P1, P2, P3) techniques selon l'une des revendications 2 ou 3, caractérisé par le fait qu'il génère une interruption de violation en écriture, avec inhibition de l'écriture, lorsqu'une application technique accède en écriture à une tranche d'espace mémoire pour laquelle elle est sans droits.

5. Procédé de traitement de plusieurs applications (P1, P2, P3) techniques selon l'une des applications 2 à 3, caractérisé par le fait qu'il, avant de procéder à une lecture de données relatives à l'application technique en cours d'exécution dans une tranche d'espace mémoire, vérifie si cette tranche d'espace mémoire correspond aux droits possédés par l'application technique en cours d'exécution.

6. Procédé de traitement de plusieurs applications (P1, P2, P3) techniques selon la revendication 5, caractérisé par le fait qu'il génère une interruption de violation en lecture lorsqu'une application technique accède en lecture à une tranche d'espace mémoire pour laquelle elle est sans droits.

7. Procédé de traitement de plusieurs applications (P1, P2, P3) techniques selon l'une des revendications 1 à 6, caractérisé par le fait qu'il exécute dans une même tranche de temps, sans ségrégation temporelle, une application technique avec plusieurs niveaux de criticité.

8. Procédé de traitement de plusieurs applications (P1, P2, P3) techniques selon l'une des revendications 1 à 7, caractérisé par le fait que, lorsque l'une des applications techniques fait appel aux services du logiciel de base (LB) du calculateur (CA), il interrompt temporairement le calculateur et met à jour les droits de l'application technique courante, cette mise à jour correspondant aux droits du logiciel de base appliqué à l'application technique, le logiciel de base possédant un niveau de criticité supérieur ou égal au niveau le plus élevé de toutes les applications techniques traitées par le calculateur.

9. Dispositif de traitement de plusieurs applications techniques contrôlées par calculateur comportant:
- des moyens pour définir des cycles de temps de travail au sein d'un même calculateur générant des interruptions de cycle (ITRTC),
- des moyens pour définir, pendant ces cycles de temps de travail, des tranches de temps (T1, T2, T3) de durée fixée, allouées aux applications techniques (P1, P2, P3), et pour générer en fin de tranche de temps allouée à une application, une inten-uption de début (ITD1, ITD2) pour faire débuter une autre application,
- des moyens pour allouer à chaque application au moins une tranche d'espace mémoire protégée en écriture vis à vis des autres applications,
caractérisé en ce qu'il comporte de plus
- des moyens pour générer pendant la tranche de temps allouée à l'application une interruption de fin (ITF1, ITF2) destinée à interrompre l'application technique en cours sauf si une étape non susceptible d'interruption, dite section atomique, se déroule.

10. Dispositif de traitement de plusieurs applications techniques contrôlées par calculateur, selon la revendication 9, caractérisé en ce que les moyens pour définir les cycles de temps de travail comportent un compteur de temps (CT), un registre de durée de cycle (RITRTC), un comparateur d'égalité (Cc) qui compare la valeur du compteur de temps à celle du registre de durée, qui génère l'interruption de cycle (ITRTC) en cas d'égalité et qui remet à zéro le compteur de temps.

11. Dispositif de traitement de plusieurs applications techniques contrôlées par calculateur, selon l'une des revendications 9 ou 10, caractérisé en ce que les moyens pour définir chaque tranche de temps comportent un compteur de temps (CT), un registre de durée (RITD), un comparateur d'égalité (C) qui compare la valeur du compteur de temps à celle du registre de durée et qui génère l'interruption de début (ITD) en cas d'égalité.

12. Dispositif de traitement de plusieurs applications techniques contrôlées par calculateur, selon l'une des revendications 9 à 11, caractérisé en ce que les moyens pour générer une interruption de fin comportent un compteur de temps (CT), un registre de durée (RITF), un comparateur d'égalité (C) qui compare la valeur du compteur de temps à celle du registre de durée et qui génère l'interruption de fin (ITF) en cas d'égalité.

13. Dispositif de traitement de plusieurs applications techniques contrôlées par calculateur, selon l'une des revendications 9 à 12, caractérisé en ce que les moyens pour allouer à chaque application au moins une tranche d'espace mémoire comportent un registre de droits (RD) contenant les droits de l'application technique en cours, un détecteur de zone (D2) contenant l'affectation de la tranche d'espace mémoire et une table de vérité (TVE) en écriture dont l'une des entrées est réalisée par le détecteur de zone et l'autre par le registre de droits et qui indique si l'inscription est autorisée ou non.

14. Dispositif de traitement de plusieurs applications techniques contrôlées par calculateur, selon la revendication 13, caractérisé en ce que les moyens pour allouer à chaque application technique au moins une tranche d'espace mémoire comportent une table de vérité en lecture (TVL) dont l'une des entrées est réalisée par le détecteur de zone (DZ) et l'autre par le registre de droits (RD) et qui indique si la lecture d'une tranche d'espace mémoire est autorisée ou non à une application technique.

## Patentansprüche

1. Verfahren zum Verarbeiten mehrerer technischer Anwendungen (P1, P2, P3), die durch einen Rechner gesteuert werden, mit den folgenden Schritten:
- Ausführen aller technischer Anwendungen im selben Rechner, der in aufeinanderfolgenden Arbeitszyklen arbeitet, indem ihnen während dieser Arbeitszyklen im voraus wenigstens ein Zeitschlitz (T1, T2, T3) mit fester Dauer zugewiesen wird,
- am Ende des einer technischen Anwendung (P3) zugewiesenen Zeitschlitzes (T3) Erzeugen einer Anfangsunterbrechung (ITD4), die die Ausführung einer anderen technischen Anwendung (T4) beginnen soll,
- Zuweisen wenigstens eines Speicherraum-Schlitzes an jede technische Anwendung, wobei von anderen technischen Anwendungen auf diesen Speicherraum-Schlitz nicht zum Schreiben zugegriffen werden kann, dadurch gekennzeichnet, daß es einen Schritt umfaßt, der darin besteht:
- im voraus während des Zeitschlitzes (T3) eine Endunterbrechung (ITF3) zu erzeugen, die dazu bestimmt ist, die momentane Anwendung (P3) zu unterbrechen, es sei denn, daß momentan ein für eine Unterbrechung nicht geeigneter Schritt, ein sogenannter atomarer Abschnitt (S), ausgeführt wird, wobei das Zeitintervall zwischen der Endunterbrechung (ITF3) und der folgenden Anfangsunterbrechung (ITD4) wenigstens gleich der längsten Dauer atomarer Abschnitte ist, so daß eine technische Anwendung, die während ihrer Ausführung ein gegebenes Kritikalitätsniveau besitzt, eine andere technische Anwendung, die ein höheres oder gleiches Kritikalitätsniveau besitzt, nicht stört.

2. Verfahren zum Verarbeiten mehrerer technischer Anwendungen (P1, P2, P3) nach Anspruch 1, dadurch gekennzeichnet, daß es der momentanen technischen Anwendungen Rechte zuweist und vor dem Ausführen eines Schreibens von Daten bezüglich der momentan ausgeführten technischen Anwendung in einen Speicherraum-Schlitz prüft, ob dieser Speicherraum-Schlitz den Rechten entspricht, die die momentan ausgeführte technische Anwendung besitzt, wobei die Rechte dieser technischen Anwendung insbesondere von ihrem Kritikalitätsniveau abhängen.

3. Verfahren zum Verarbeiten mehrerer technischer Anwendungen (P1, P2, P3) nach Anspruch 2, bei dem bestimmte der Daten bezüglich einer technischen Anwendung an wenigstens ein der technischen Anwendung zugeordnetes Element geleitet werden, dadurch gekennzeichnet, daß es diese Daten von dem Speicherraum-Schlitz über einen Kommunikationsbus (B1, B2) an das zugeordnete Element schickt, indem es sie eventuell durch eine Pufferspeicherzone (ZT) befördert.

4. Verfahren zum Verarbeiten mehrerer technischer Anwendungen (P1, P2, P3) nach einem der Ansprüche 2 oder 3, dadurch gekennzeichnet, daß es eine Schreibverletzungs-Unterbrechung mit Sperrung des Schreibens erzeugt, wenn eine technische Anwendung einen Schreibzugriff auf einen Speicherraum-Schlitz vornimmt, für den sie keine Rechte besitzt.

5. Verfahren zum Verarbeiten mehrerer technischer Anwendungen (P1, P2, P3) nach einem der Ansprüche 2 bis 3, dadurch gekennzeichnet, daß es vor dem Ausführen eines Lesens von Daten bezüglich der momentan ausgeführten technischen Anwendung in einem Speicherraum-Schlitz prüft, ob dieser Speicherraum-Schlitz den Rechten entspricht, die die momentan ausgeführte technische Anwendung besitzt.

6. Verfahren zum Verarbeiten mehrerer technischer Anwendungen (P1, P2, P3) nach Anspruch 5, dadurch gekennzeichnet, daß es eine Leseverletzungs-Unterbrechung erzeugt, wenn eine technische Anwendung einen Lesezugriff auf einen Speicherraum-Schlitz vornimmt, für den sie keine Rechte besitzt.

7. Verfahren zum Verarbeiten mehrerer technischer Anwendungen (P1, P2, P3) nach einem der Ansprüche 1 bis 6, dadurch gekennzeichnet, daß es im selben Zeitschlitz ohne zeitliche Entmischung eine technische Anwendung mit mehreren Kritikalitätsniveaus ausführt.

8. Verfahren zum Verarbeiten mehrerer technischer Anwendungen (P1, P2, P3) nach einem der Ansprüche 1 bis 7, dadurch gekennzeichnet, daß es dann, wenn eine der technischen Anwendungen auf Dienste der Basissoftware (LB) des Rechners (CA) Bezug nimmt, den Rechner vorübergehend unterbricht und die Rechte der momentanen technischen Anwendung aktualisiert, wobei diese Aktualisierung den Rechten der Basissoftware entspricht, die auf die technische Anwendung angewendet wird, wobei die Basissoftware ein Kritikalitätsniveau besitzt, das größer oder gleich dem höchsten Niveau aller vom Rechner verarbeiteten technischen Anwendungen ist.

9. Vorrichtung zum Verarbeiten mehrerer technischer Anwendungen, die von einem Rechner gesteuert werden, mit:
- Mitteln zum Definieren von Arbeitszeitzyklen im selben Rechner, die Zyklusunterbrechungen (ITRTC) erzeugen,
- Mitteln zum Definieren von Zeitschlitzen (T1, T2, T3) mit fester Dauer während dieser Arbeitszeitzyklen, die den technischen Anwendungen (P1, P2, P3) zugewiesen werden, und zum Erzeugen einer Anfangsunterbrechung (ITD1, ITD2) am Ende des einer Anwendung zugewiesenen Zeitschlitzes, um eine andere Anwendung zu beginnen,
- Mitteln zum Zuweisen wenigstens eines Speicherraum-Schlitzes an jede Anwendung, der gegenüber anderen Anwendungen schreibgeschützt ist,
dadurch gekennzeichnet, daß sie außerdem umfaßt:
- Mittel zum Erzeugen einer Endunterbrechung (ITF1, ITF2) während des der Anwendung zugewiesenen Zeitschlitzes, wobei die Endunterbrechung dazu bestimmt ist, die momentane technische Anwendung zu unterbrechen, es sei denn, daß ein für eine Unterbrechung nicht geeigneter Schritt, ein sogenannter atomarer Abschnitt, abläuft.

10. Vorrichtung zum Verarbeiten mehrerer technischer Anwendungen, die von einem Rechner gesteuert werden, nach Anspruch 9, dadurch gekennzeichnet, daß die Mittel zum Definieren der Arbeitszeitzyklen einen Zeitzähler (CT), ein Zyklusdauer-Register (RITRTC) und einen Gleichheitskomparator (Cc), der den Wert des Zeitzählers mit demjenigen des Dauer-Registers vergleicht und eine Zyklusunterbrechung (ITRTC) im Falle der Gleichheit erzeugt und den Zeitzähler auf null zurücksetzt, umfassen.

11. Vorrichtung zum Verarbeiten mehrerer technischer Anwendungen, die von einem Rechner gesteuert werden, nach einem der Ansprüche 9 oder 10, dadurch gekennzeichnet, daß die Mittel zum Definieren jedes Zeitschlitzes einen Zeitzähler (CT), ein Dauer-Register (RITD) und einen Gleichheitskomparator (C), der den Wert des Zeitzählers mit demjenigen des Dauer-Registers vergleicht und bei Gleichheit eine Anfangsunterbrechung (ITD) erzeugt, umfassen.

12. Vorrichtung zum Verarbeiten mehrerer technischer Anwendungen, die von einem Rechner gesteuert werden, nach einem der Ansprüche 9 bis 11, dadurch gekennzeichnet, daß die Mittel zum Erzeugen einer Endunterbrechung einen Zeitzähler (CT), ein Dauer-Register (RITF) und einen Gleichheitskomparator (C), der den Wert des Zeitzählers mit demjenigen des Dauer-Registers vergleicht und bei Gleichheit eine Endunterbrechung (ITF) erzeugt, umfassen.

13. Vorrichtung zum Verarbeiten mehrerer technischer Anwendungen, die von einem Rechner gesteuert werden, nach einem der Ansprüche 9 bis 12, dadurch gekennzeichnet, daß die Mittel zum Zuweisen wenigstens eines Speicherraum-Schlitzes an jede Anwendung ein Rechte-Register (RD), das die Rechte der momentanen technischen Anwendung enthält, einen Zonendetektor (DZ), der die Zuweisung des Speicherraum-Schlitzes enthält, sowie eine Schreib-Wahrheitstabelle (TVE), wovon ein Eingang durch den Zonendetektor verwirklicht ist und der andere durch das Rechte-Register verwirklicht ist und die angibt, ob das Schreiben zugelassen ist oder nicht, umfassen.

14. Vorrichtung zum Verarbeiten mehrerer technischer Anwendungen, die von einem Rechner gesteuert werden, nach Anspruch 13, dadurch gekennzeichnet, daß die Mittel zum Zuweisen wenigstens eines Speicherraum-Schlitzes an jede technische Anwendung eine Lese-Wahrheitstabelle (TVL) umfassen, wovon ein Eingang durch den Zonendetektor (DZ) verwirklicht ist und der andere Eingang durch das Rechte-Register (RD) verwirklicht ist und die angibt, ob das Lesen eines Speicherraum-Schlitzes für eine technische Anwendung zugelassen ist oder nicht.

## Claims

1. Method of processing several computer-controlled technical applications (P1, P2, P3) comprising the steps consisting in:
- executing all the technical applications within the same computer working in successive work cycles by allotting thereto, during these work cycles, at least one time slot (T1, T2, T3) of previously fixed duration,
- generating at the end of time slot (T3) allotted to a technical application (P1) a start interrupt (ITD4) aimed at starting the execution of another technical application (P4),
- allotting to each technical application at least one memory space slot for writing data, this memory space slot being write-inaccessible to the other technical applications, characterized in that it comprises a step consisting in:
- generating previously, during the time slot (T3), an end interrupt (ITF3) intended to interrupt the current application (P3) unless an uninterruptible step, termed an atomic section (S), is currently being executed, the time interval between the end interrupt (ITF3) and the following start interrupt (ITD4) being at least equal to the longest duration of the atomic sections, so that a technical application which during execution possesses a given level of criticality does not disturb another technical application having a higher or equal level of criticality.

2. Method of processing several technical applications (P1, P2, P3) according to Claim 1, characterized in that it allocates entitlements to the current technical application and, before writing data relating to the technical application currently executing into a memory space slot, checks whether this memory space slot corresponds to the entitlements possessed by the technical application being executed, the entitlements of the said technical application being in particular dependent on its level of criticality.

3. Method of processing several technical applications (P1, P2, P3) according to Claim 2, in which certain data relating to a technical application are routed to at least one entity associated with the technical application, characterized in that it sends them from the memory space slot via a communication bus (B1, B2,) to the associated entity, possibly causing them to travel through a buffer memory area (ZT).

4. Method of processing several technical applications (P1, P2, P3) according to one of Claims 2 or 3, characterized in that it generates a write-violation interrupt, with prohibition of writing, when a technical application write-accesses a memory space slot in respect of which it is without entitlements.

5. Method of processing several technical applications (P1, P2, P3) according to either of Claims 2 and 3, characterized in that it, before reading data relating to the technical application currently executing from a memory space slot, checks whether this memory space slot corresponds to the entitlements possessed by the technical application currently being executed.

6. Method of processing several technical applications (P1, P2, P3) according to Claim 5, characterized in that it generates a read-violation interrupt when a technical application read-accesses a memory space slot in respect of which it is without entitlements.

7. Method of processing several technical applications (P1, P2, P3) according to one of Claims 1 to 6, characterized in that it executes in the same time slot, without time segregation, a technical application with several levels of criticality.

8. Method of processing several technical applications (P1, P2, P3) according to one of Claims 1 to 7, characterized in that, when one of the technical applications calls upon the services of the basic software (LB) of the computer (CA), it temporarily interrupts the computer and updates the entitlements of the current technical application, this update corresponding to the entitlements of the basic software applied to the technical application, the basic software possessing a level of criticality higher than or equal to the highest level of all the technical applications processed by the computer.

9. Device for processing several computer-controlled technical applications, comprising:
means for defining work time cycles within the same computer generating cycle interrupts (ITRTC),
means for defining, during these work time cycles, time slots (T1, T2, T3) of fixed duration, which are allotted to the technical applications (P1, P2, P3), and for generating at the end of a time slot allotted to an application, a start interrupt (ITD1, ITD2) for starting another application,
means for allotting each application at least one memory space slot write-protected in relation to the other applications,
characterized in that it also comprises
means for generating, during the time slot allotted to the application, an end interrupt (ITF1, ITF2) intended to interrupt the current technical application unless an uninterruptible step, termed an atomic section, is running.

10. Device for processing several computer-controlled technical applications, according to Claim 9, characterized in that the means for defining the work time cycles comprise a time counter (CT), a cycle duration register (RITRTC), an equality comparator (Cc) which compares the value of the time counter to that of the duration register, which generates the cycle interrupt (ITRTC) in case of equality and which resets the time counter to zero.

11. Device for processing several computer-controlled technical applications, according to either of Claims 9 and 10, characterized in that the means for defining each time slot comprise a time counter (CT), a duration register (RITD), an equality comparator (C) which compares the value of the time counter with that of the duration register and which generates the start interrupt (ITD) in case of equality.

12. Device for processing several computer-controlled technical applications, according to one of Claims 9 to 11, characterized in that the means for generating an end interrupt comprise a time counter (CT), a duration register (RITF), an equality comparator (C) which compares the value of the time counter with that of the duration register and which generates the end interrupt (ITF) in case of equality.

13. Device for processing several computer-controlled technical applications, according to one of Claims 9 to 12, characterized in that the means for allotting each application at least one memory space slot comprise an entitlements register (RD) containing the entitlements of the current technical application, an area detector (DZ) containing the assignment of the memory space slot and a write truth table (TVE), one of whose inputs is embodied by the area detector and the other by the entitlements register and which indicates whether or not writing is authorized.

14. Device for processing several computer-controlled technical applications, according to Claim 13, characterized in that the means for allotting each technical application at least one memory space slot comprise a read truth table (TVL), one of whose inputs is embodied by the area detector (DZ) and the other by the entitlements register (RD) and which indicates whether the reading of a memory space slot is or is not authorized to a technical application.
